# EUROPEAN PATENT APPLICATION

(11) **EP 1 529 671 A2**
(43) Date of publication of application: **11.05.2005**
(21) Application number: 04078025.6
(22) Date of filing: 03.11.2004
(51) Int. Cl.: B60J 7/06

(54) **Cabriolet cover for trucks**

(30) Priority: 07.11.2003 IT BA20030057
(71) Applicant: Lippolis, Ambrogio, 70017 Putignano (BA) (IT)
(72) Inventor: Lippolis, Ambrogio, 70017 Putignano (BA) (IT)

(57) **Abstract**

Cover intended to close the upper opening of a truck comprising a supporting frame on which a storm-resistant covering sheet is applied and which is intended to slide between an open position and a closed position, and vice versa. The cover comprises a plurality of sliding supporting means (210) of which one is driving, whereas the other are driven. At each end, each supporting means comprises a resting foot (212) intended to slide along the longitudinal peripheral side of the truck opening and to be equipped with a friction reduction sliding block (213). A device for driving the sliding supporting frame comprises a motor, two traction cables (400) and, for each traction cable, a driving pulley and a driven pulley. Each cable is intended to be loop-shaped, to be arranged externally and parallel to the corresponding longitudinal side, to pass through a plurality of guiding means (225) connected to the plurality of supporting means and to be fixed to the driving supporting means, so as to let the sliding of the driven supporting means (210) along the cables acting on the driving supporting means. The guiding means (225) are connected to the resting feet (212) of the corresponding supporting means (210) through means (270) for releasably clamping such guiding means (225) and the releasable clamping means (270) are connected to the corresponding feet (212) through detachable means (216-217).

## Description

### Technical field of the invention

The present invention relates to a cover intended to be applied specifically on trucks, but which may be applied to static structures too. It is a question of a cabriolet cover, i.e. a convertible cover which is intended to pass from a position in which it is closed to a position in which it is open.

### Background art

A cabriolet cover is disclosed in EP-1 093 949 and comprises a support frame including a plurality of transverse sliding arches or support means, each one being provided at its ends with resting feet intended to slide along the peripheral longitudinal upper sides of the structure to be covered: these sides mark off, together with the remaining transverse sides, the upper opening of such a structure, which is normally closed by the cover and opened when needed. The sliding of the resting feet of each supporting arch is rendered easier by the cooperation of each foot with a sliding block. A cover sheet or canvas, made from a storm-resistant material, is applied on the support frame and is firmly fixed to the sliding supporting arches so as to accompany these latter during their movement from the open position to the closed position and vice versa.

An operating device acting on the support frame comprises two metal traction cables which are loop-shaped and arranged at the upper part of the structure, externally and parallel with respect to the lateral walls of this latter. These cables are integral with the posterior support arch of the frame, while causing the sliding of the remaining anterior arches along themselves and are operated by two pulleys which, acting on the posterior arch, pull also the current arches.

Such a cover of the prior art has a drawback consisting in the fact that it requires its total dismantlement in the case of substitution of a damaged support arch, with no possibility to recover the pulling cables and thus with loose of time and materials.

### Brief description of the invention

The present invention aims at improving the covering of static or mobile areas having a substantially rectangular transverse section, and particularly aims at improving the covers for trucks and proposes one of the type disclosed in the framework of the prior art which is the object of claim 1 attached to this disclosure.

Other features of the cabriolet cover according to the present invention are the object of the dependent claims which are also attached to this disclosure.

A basic advantage of such a cover consists in that it is not needed its dismantlement nor that of the traction cables in the case of substitution of one or more supporting arches.

Another advantage consists in its total storm-resistant feature, in particular with respect to the seeping of water into the environment protected by the cover at the level of its perimeter. Other advantages will emerge from the following description.

### Best mode of carrying out the invention

It is now disclosed, essentially as an example, a preferred embodiment of the cover according to the invention, with reference to the figures attached to this description and summarized hereinafter:
- Fig. 1 is a perspective view of the container of a truck equipped with its cover in the closed position;
- Fig.2 is a perspective view of the container shown in Fig. 1 equipped with its cover in the open position;
- Fig.3 is a perspective view of a current supporting arch of the cover;
- Fig.4 is a detailed representation of a first embodiment, shown in Fig.3, of the means connecting the guiding means of the current arches to these latter allowing the substitution of a damaged arch without dismantling the cover;
- Fig. 5 is a perspective view of the posterior supporting arch of the cover;
- Fig.6 corresponds to Fig.4 as applied to the posterior arch showing the modification of the above mentioned first embodiment such as applied to the posterior arch;
- Fig. 7 and Fig. 8 represent in perspective the preferred embodiment of the means connecting the guiding means of the current arches to these latter showing releasably clamping means, respectively in the clamping and release position;
- Fig.9 shows the driving device of the cabriolet cover: Fig9a and Fig.9b show a perspective view, respectively, of the driving and driven pulley;
- Fig.10 shows in perspective the motor for driving the driving pulleys and the electrical connections for powering such a motor;
- Fig. 11a, Fig.11b, Fig.11c and Fig.11d show the embodiment of the driving pulleys and the driving means arranged inside an enclosure, which corresponds to a driving kit ready for fastening to the truck, while ensuring protection against atmospheric elements: Fig.11a and

Fig.11b are respectively a front and a side elevation view, whereas Fig.11c and Fig.11d are perspective representations of the protection enclosure of the driving kit with the front panel thereof respectively removed and retained.

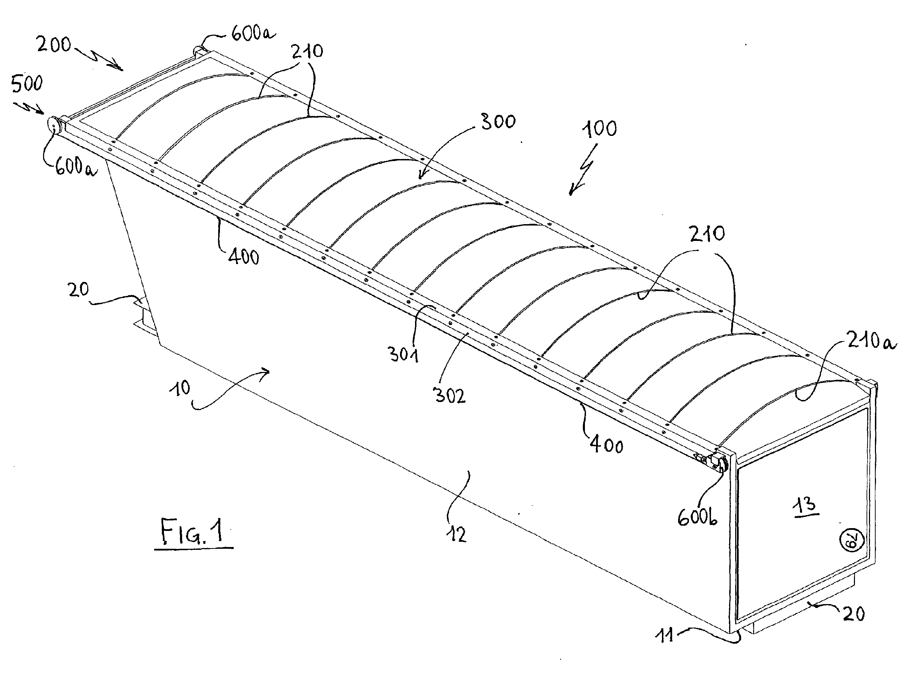

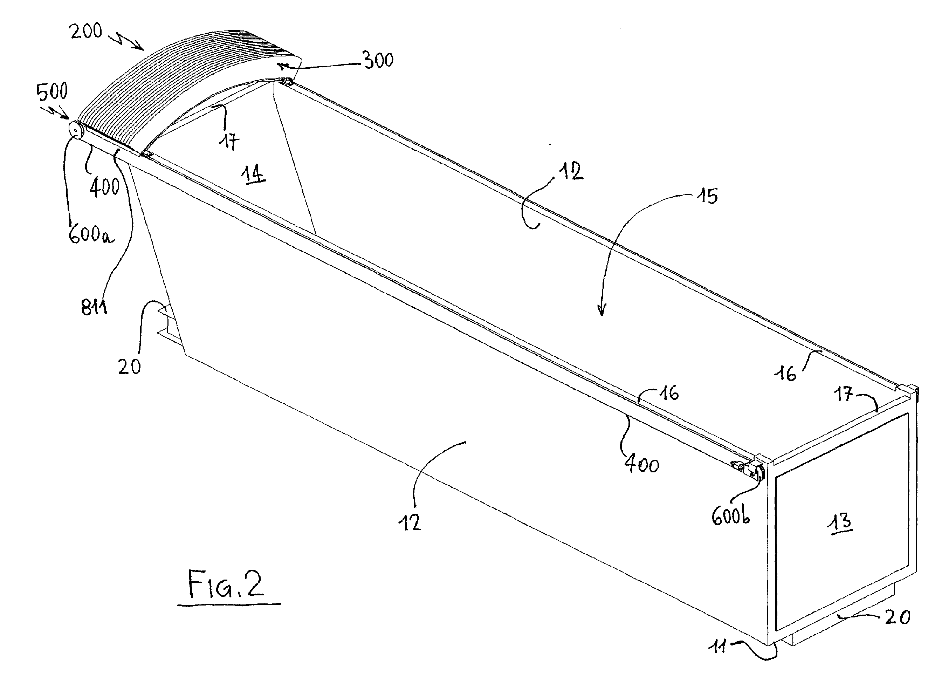

In Fig. 1 it is represented a container 10 of a truck (not shown), whose bottom 11 rests on a frame 20 of the truck. Such a container is marked off by this bottom 11 as well as by peripheral lateral walls 12, a posterior wall 13 and an anterior wall 14 (see Fig.2); the posterior wall is advantageously of the tipping over (or pivoting) type so as to allow the discharging of the wares which have been charged inside the container. This latter is open superiorly (see Fig.2), the upper opening 15 being marked off by two longitudinal peripheral sides 16 and by two transversal peripheral sides 17. In Fig.1 this opening 15 is closed by a sliding cover 100 of the cabriolet type, which is shown justly in the closed position, whereas in Fig.2 it is shown in the open position.

The cover 100 comprises a supporting frame 200 equipped with a plurality of transverse sliding supporting means having the shape of arches (but they may have a straight shape or any other convenient configuration) made preferably from metal: among these arches it is possible to distinguish a posterior arch 210a and a plurality of anterior arches 210 (namely, those arranged on the cab side with respect to the last arch, which is justly the posterior one). A covering sheet 300 (see Fig. 1 and Fig.2) is applied on the sliding supporting frame 200 and is fastened to this latter in a manner which will be disclosed hereinafter. Such a sheet is made from a material which is fireproof and storm-resistant (this result may be achieved by covering a sheet made from a polyester fabric with a layer of PVC) and is intended to accompany the sliding supporting arches in their movement from the open position (or folded position), shown in Fig. 2, to the closed position (or extended position) shown in Fig. 1, and vice versa.

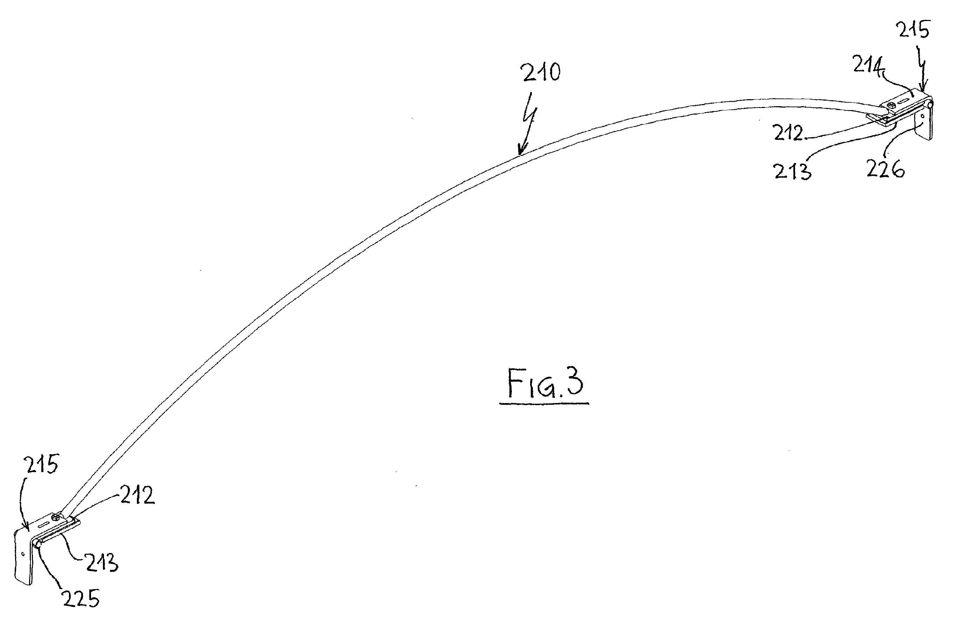

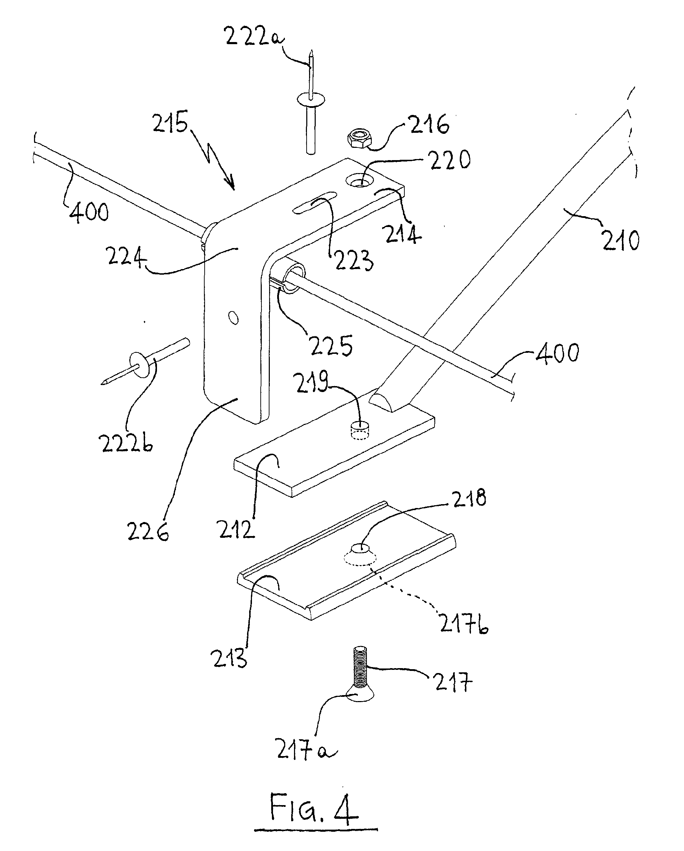

Each current anterior supporting arch 210 is shown in Fig.3 and comprises, at each end thereof, a resting foot 212 intended to slide along the longitudinal peripheral side 16 and to be equipped with a sliding block 213 for friction reduction during the sliding along such a side 16 (see also Fig. 4): the sliding block is made from a suitable plastic material, such as Teflon for example, and is arranged under the resting foot as a shoe (or, better said, as a sole).

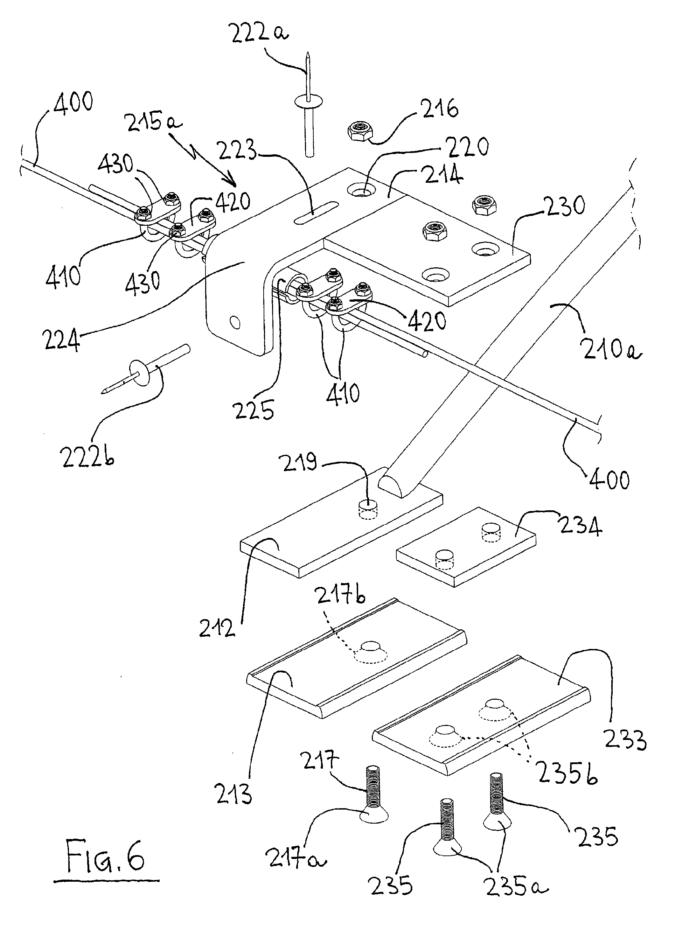

In Fig.4, as well as in Fig.6, it is shown a guiding means 225 connected to the foot of each arch and intended to allow the sliding of an arch along a traction cable 400 belonging to a driving means which will be disclosed hereinafter.

The embodiment shown for the current (anterior) arch 210 in Fig.3 and detailed in Fig.4, as well as the embodiment shown for the posterior arch 210a, corresponds to a first embodiment aiming at avoiding the dismantlement of the whole cover 100 in the case of substitution of a damaged arch, thus highly reducing the maintenance duration and costs. This has been achieved through a detachable fastening means 215 intended to detachably connect the above mentioned guiding means 225 to the resting foot 212 of each arch: if an arch is accidentally damaged, it is sufficient to detach the involved arch from the fastening means 215 without any need to dismantle the whole cover.

Before describing the preferred embodiment, it is useful to disclose in detail Fig. 4 and Fig.6 in relation to the detachable fastening means 215. This latter comprises a counterfoot 214 intended to be detachably fastened to the foot 212 and to a corresponding sliding block 213: in Fig.4 are shown the nut 216 and the corresponding bolt 217 intended to pass through the holes 218, 219 and 220 which are arranged, respectively, in the sliding block 213, in the foot 212 and in the counterfoot 214. The bolt 217 has advantageously a conical head 217a intended to be housed in a corresponding seating 217b arranged in the sliding block 213 (this seating is shown as a dotted line in Fig.4): in such a way the head of the bolt does not juts out from the sliding block, thus retaining the sliding character with a reduced friction thereof.

The counterfoot 214 allows also the fastening of the internal portion 301 (see Fig. 1 and

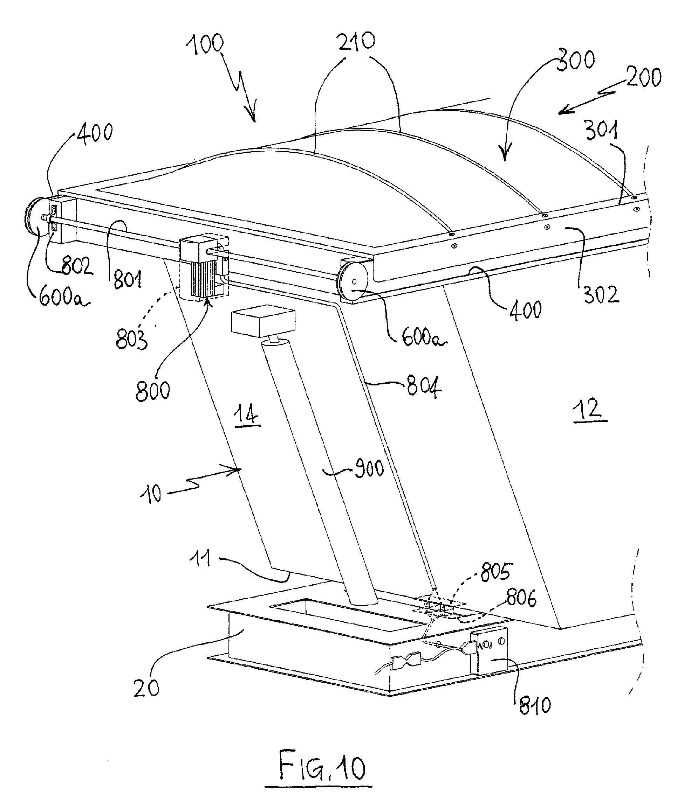

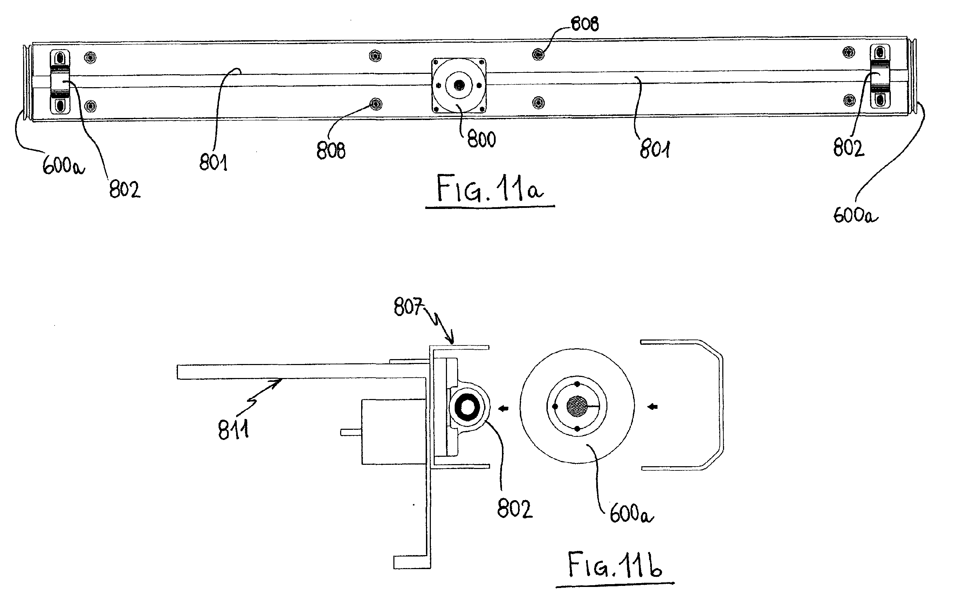

Fig.10) of the longitudinal peripheral side of the covering sheet 300:such a fastening is achieved by means of a rivet 222a intended to pass, after application of this sheet (which is not shown in Fig.4 and Fig.6 for need of simplification of the drawing), through the hole 223, arranged in the counterfoot 214 and intended to lodge in the foot 212 and in the sliding block 213 below.

Fig.4 shows also an external downwardly oriented vertical wing 226 jutting out from the external end of the counterfoot 214. This wing is intended to allow the fastening of the external portion 302 (see once more Fig.1 and Fig.10) of the longitudinal peripheral side of the covering sheet 300.

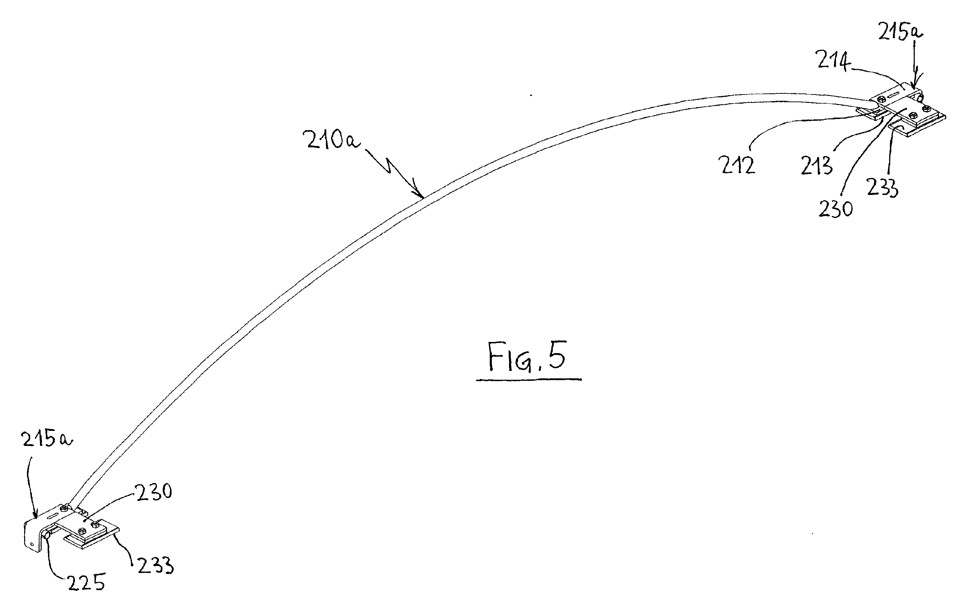

Fig.5 shows the posterior supporting means 210a of the frame 200, whose detachable fastening means 215a is modified with respect to the embodiment identified with the numerical reference 215 adopted for the current arch 210, as disclosed hereinafter in relation to the detailed representation of Fig.6. These means 215a corresponding to the resting foot 212 of the posterior supporting arch 210a comprises a first portion, which corresponds exactly to the portion 215 of the foot of a current arch 210, and a second portion, having the same thickness of the first portion (and thus of the counterfoot 214) and consisting of a horizontal longitudinal projection 230: this latter is intended to provide a wider resting basis to the posterior supporting arch 210a and thus to keep such an arch in a substantially stable vertical position during the passage of the cover from the closed position to the open position, and vice versa. In such a way, the breakdown of the cover during its operation is avoided and there is no need to put it manually in a correct position.

The projection 230 is equipped with a sliding block 233 allowing its sliding along the corresponding longitudinal side of the truck: in order to allow the correct sliding of both sliding blocks 213 and 233, a levelling plate 234 is interposed between the projection 230 of the counterfoot 214 and the sliding block 233: this plate corresponds to and has the same thickness of the foot 212 (of course, no levelling plate is needed if the foot is applied on the counterfoot instead of applying it below). The plate 234 is intended to be fastened to the projection and to the corresponding sliding block through the bolts 235 which in turn are intended to be locked by means of the corresponding nuts shown in an aligned perspective relation in Fig.6. Also in this case the head 235a of the bolts is conical and intended to be housed in the corresponding seating 235b for the same reasons already disclosed with respect to the bolt 217 in Fig.4.

Concerning now the preferred embodiment of the means connecting the guiding means 225 to the resting feet 212, during the reduction into practice of the invention it has emerged that to avoid to dismantle the cover of a truck it is not sufficient to ensure the detachable character of the connecting means. In fact, it may occur that even the means for detachably connecting each foot to its guiding means may be accidentally damaged when a damage involves the supporting arches or in other circumstances: in this case, while the substitution of the damaged arch does not require the dismantlement of the cover because of the detachable character of the connecting means, the substitution of the damaged connecting means requires anyway the dismantlement of the cables passing through the guiding means. In order to avoid this, the present invention provides a connection of the guiding means 225 to the resting feet 212 of the corresponding supporting means 210 and 210a through means for releasably clamping such guiding means, while connecting these releasable clamping means to the corresponding feet through detachable means.

Now, the guiding means may be releasably clamped between an upper member consisting of a counterfoot (such as disclosed before) and a lower member consisting of the very sliding block or, as an alternative, between a member consisting of the very corresponding foot and another member consisting of a counterfoot, the sliding block being applied to this latter.

Of course, even to this preferred embodiment apply the arrangements disclosed before concerning the external vertical downwardly oriented wing 226, which is intended to fasten the external portion 302 of the peripheral longitudinal side of the covering sheet 300, as well as the horizontal longitudinal projection 230 jutting out from the counterfoot of the posterior supporting means 210a and intended to constitute a wider resting basis for the foot thereof and thus to keep it in a substantially stable vertical position during the passage from the open position to the closed position, and vice versa, such a projection 230 being equipped with a sliding block 233 and the possibly necessary levelling piece 234.

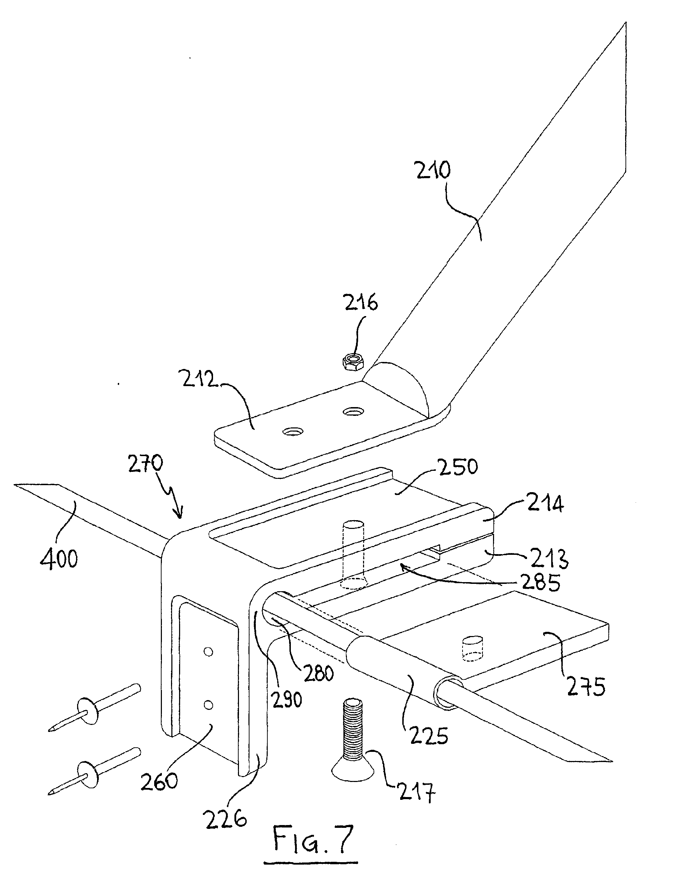

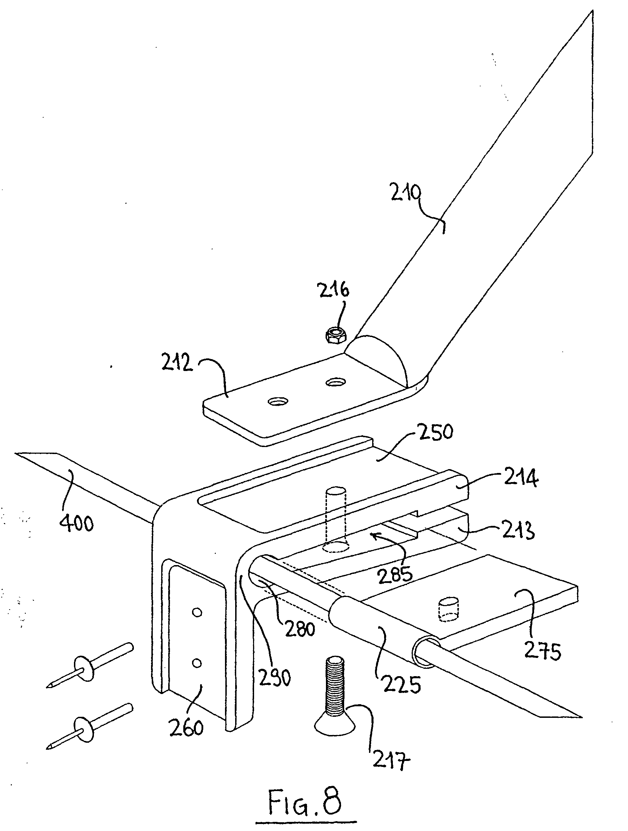

This preferred embodiment is shown in Fig.7 and Fig. 8 in which the means for releasably clamping each guiding means to a foot are identified with the numerical reference 270.

These means 270 consist of a clamp whose upper jaw corresponds to the counterfoot 214, whereas the lower jaw corresponds to the sliding block 213, the jaws being articulated at their external ends. A seating 280 for the guiding means 225 is arranged between the two jaws near the articulation 290 thereof: the guiding means is shown in the released position, whereas it is in the clamped position (not shown: Fig.7 shows the jaws in the clamping position with the guiding means outside its housing for clarity purpose) when it is housed in the seating 280. In this embodiment the counterfoot 214, the sliding block 213 and the vertical wing 226 are made as a unique piece from a plastic material. It is easy to understand how to release the guiding means 225 from its housing 280: an operator has to separate manually the free ends of the jaws, which can rotate around the articulation 290 due to the elasticity of the plastic material, after detaching the bolt 217 from the foot 212; then he has to bring the guiding means into the released position by causing it to slide along the cable 400, while releasing this latter from the jaws by pulling it transversally through the space existing between the separated jaws. Thus, it is possible to substitute the eventually damaged means 270 without dismantling the cable and the eventually damaged supporting arch 210 without dismantling the cover 100.

In Fig.7 and Fig.8 it is also shown a stiffening tongue 275 jutting out from the guiding means 225 and intended to stiffen the plastic clamp 270: of course, a seating 285 is arranged between the two jaws for housing this tongue in the clamping position.

Furthermore, a seating 250 is arranged on the upper jaw so as to receive the foot, whereas the seating 260 arranged on the vertical wing 226 aims at facilitating the application of the sheet 300 thereon.

Of course, what has been stated for the clamping means corresponding to the current arch 210 applies also to the clamping means corresponding to the posterior arch 210a, the difference referring essentially to the presence of the projection ( with the corresponding sliding block) aiming at providing a wider resting basis to the corresponding foot. This means that, when applied to the posterior arch, the preferred embodiment of the releasable clamping means comprises the counterfoot, the projection of this latter, the sliding blocks and the vertical wing which are made as a unique piece from a plastic material. In this case, provision is also made of the above mentioned stiffening tongue.

Concerning the device for driving the cover 100, so as to cause the passage thereof from the closed position to the open position, and vice versa (as shown in Fig. 1 and Fig.2), it consists of a device which is known in the art; anyway, it is briefly disclosed for reason of comprehensiveness of the disclosure.

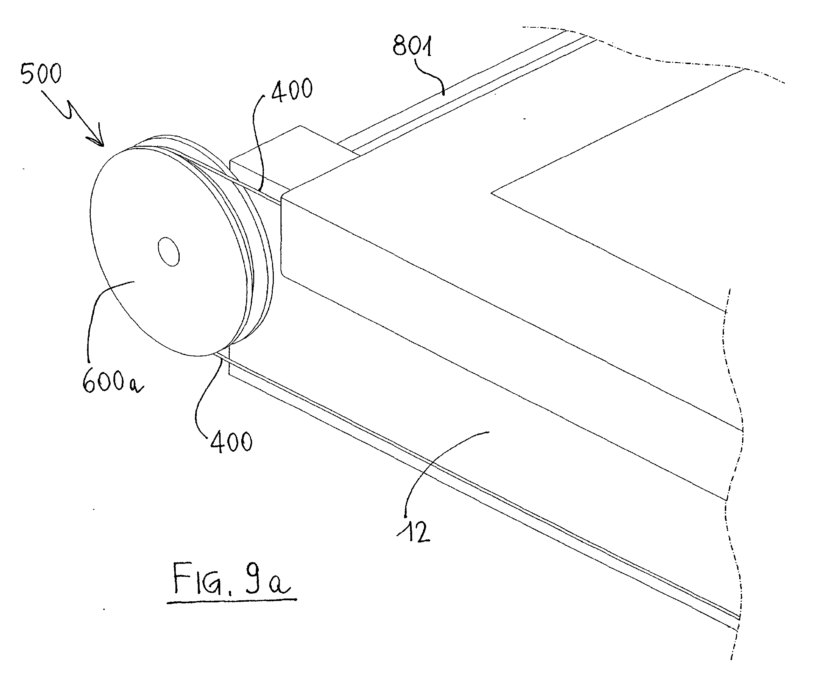

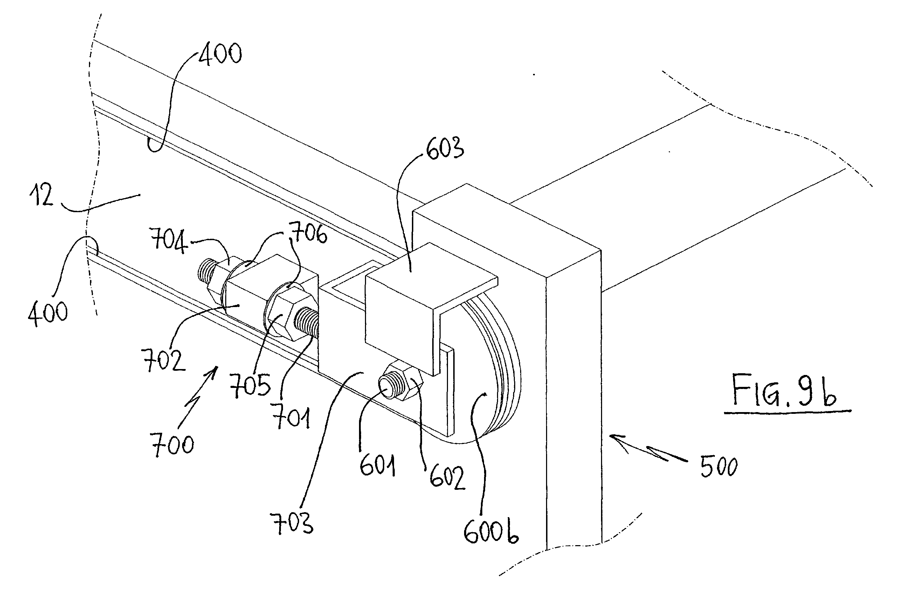

This device is shown in Fig.9 and identified by the numerical reference 500. Fig.9a shows the anterior portion of the device, whereas Fig.9b shows the posterior portion thereof.

The device 500 for driving the sliding supporting frame 200 comprises two traction cables 400. Each cable is intended to be loop-shaped, to be arranged externally and parallel to the corresponding longitudinal side 16, to pass through the plurality of guiding means 225 connected to the supporting means 210 and 210a and to be fixed to the posterior supporting means 210a, so as to let the sliding of the anterior supporting means 210 along the cables 400 acting on the posterior supporting means 210a.

It is thus clear that the posterior supporting means 210a acts as a driving supporting means, whereas the anterior supporting means 210 act as driven supporting means.

For each traction cable 400 there is a driving pulley 600a and a driven pulley 600b intended to sliding the corresponding cable 400 and thus to pull the posterior (or driving) supporting means 210a together with the anterior (or driven) supporting means 210 from the open position to the closed position. The motor 800 is a means for driving the pulleys.

The fastening of a cable to the posterior supporting arch is achieved as shown in Fig.6. The ends of the cable are inserted into the guiding means 225 and juxtaposed on a cable portion having a length substantially superior to the width of the counterfoot 214, so as to be firmly clamped one against the other by means of two pairs of U-shaped clamps 410. The utilization of a pair of clamps on both sides of the counterfoot 214 is justified for security reasons. The cable is clamped between a clamp 410 and a plate 420 through the nuts 430 intended to be screwed around the threaded ends of each U-shaped clamp. In such a way, it is possible to communicate the sliding movement of the cable 400, obtained by the corresponding driving pulley 600a, to the supporting arch 210a, which is thus able to pull in turn the current anterior arches 210 sliding along the guiding means 225.

In Fig.9b, where the driven pulley 600b is shown, it is possible to see the system 700 for stretching the cable 400 and adjust the stretching degree thereof Such a system comprises a threaded shaft 701 intended to be screwed inside a perforated block 702 for adjusting the cable clamping, this block having a thread inside its hole and being fastened to the lateral wall 12. The threaded shaft 701 is intended to be mounted, through a U-shaped piece 703, on the shaft 601 of the driven pulley 600b: keeping the shaft 701 in a horizontal position is the result of locking the piece 703 through the bolt 602. The piece 603 is aimed at maintaining the cable in the pulley seating (instead of being L-shaped, the piece 603 may be U-shaped as the piece 703 and mounted as this latter on the shaft 601 of the driven pulley: in this case, the pieces 603 and 703 would be perpendicular to each other). Now, the stretching and the adjustment of the stretching degree of the cable 400 are achieved by acting on the bolts 704 and 705 around the threaded shaft 701 (such bolts are separated by the internally threaded block 702 through the washers 706).

The movement of the two driving pulleys 600a, arranged superiorly, at both sides of the container 10, is obtained through a motor 800 (see Fig.10) which is intended to transmit the movement of its own shaft to an auxiliary shaft 801 which is held at its ends by two Ω-shaped supports 802 (of which only one can be seen in Fig.10), which are equipped with bearings and at the ends of which are mounted both driving pulleys 600a.

The motor 800 is protected from the atmospheric elements and dust through an enclosure 803 shown in dotted line.

The numerical reference 900 identifies a jack for pivoting the container 10. The electric power required by the motor is supplied by means of an electric cable 804 protected by a sheath made from a plastic material and connected to the truck battery through an electric panel 810. This latter is fastened, at the level of the anterior side, to the frame 20 of the truck. The electric cable is cut on the path from the motor to the electric panel at the level of the bottom 11 of the container 10, so as to allow its pivoting without increasing the cable length, what would encumber the charging/discharging operations. The electric continuity is ensured by two conductive plates 805 and 806 made from cupper (shown in dotted lines) which are fastened respectively to the bottom 11 and to the frame 20: when the container rests completely on the frame 20, the two conductive plates are in mutual contact and maintain the electric connection, thus allowing the opening and closure operations; on the contrary, when the container is pivoted, the two plates are separated and no opening or closure operation can occur, what is favourable to the security requirements.

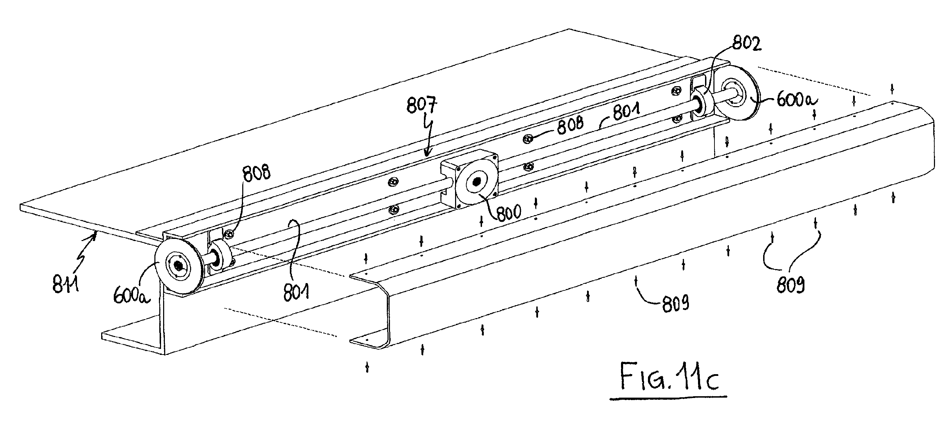

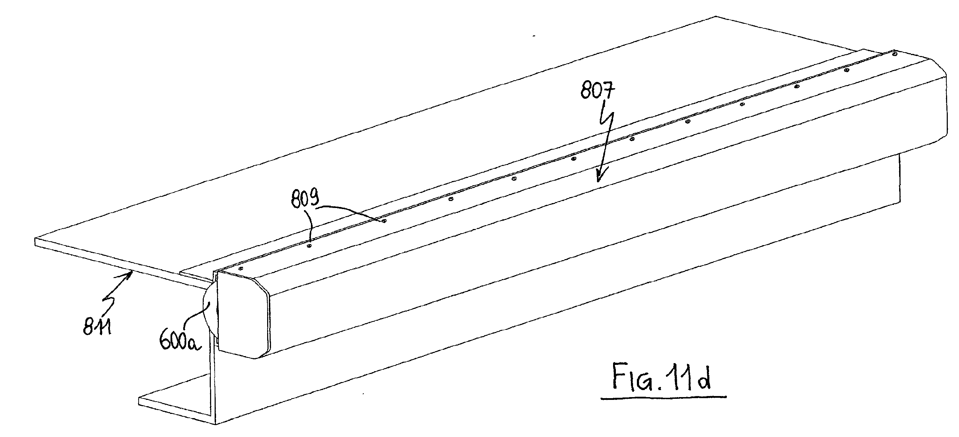

While Fig. 10 refers to an arrangement of the pulleys and the driving motor which are well known in the art, the embodiment shown in Fig.11 is interesting from a practical point of view, in that it provides a driving kit comprising the motor 800, the (auxiliary) driving shafts 801, the shaft supports 802, the driving pulleys 600a and an enclosure 807 intended to house all these items, so as to protect all of them from the atmospheric elements and at the same time to allow a rapid fastening, through a plurality of bolts 808 (with their corresponding nuts) and a plurality of rivets 809, to a projection 811 (see also Fig.2) jutting up forwardly from the anterior side of the container 10.

This projection 811 provides a resting basis for the cover 100 in the folded position outside the area corresponding to the upper opening 15, which is thus completely free for the charging/discharging operations.

## Claims

1. Cover (100) intended to close a volume marked off by a superiorly open three-dimensional structure (10) which comprises a bottom (11), lateral peripheral walls (12), a posterior wall (13) and an anterior wall (14) as well as an upper opening (15) marked off by two peripheral longitudinal sides (16) and by two peripheral transverse sides (17), said cover comprising:
- a supporting frame (200) intended to slide between an open position and a closed position, and vice versa, and comprising a plurality of sliding supporting means (210, 210a) with two ends, among which supporting means one (210a) is a driving supporting means, whereas the other (210) are driven supporting means, each supporting means comprising at each end a resting foot (212) intended to slide along the longitudinal peripheral side (16) of the opening (15) and to be equipped with a sliding block (213) aiming at reducing friction during its sliding on such a side (16);
- a covering sheet (300) intended to be applied on the supporting frame (200) and to be fixed to the supporting means (210, 210a) of this latter, so as to accompany them when passing from the open position to the closed position, and vice versa, such a sheet (300) being made from a storm-resistant material;
- a device (500) for driving the sliding supporting frame (200) intended to cause this latter, and thus the cover (100) as a whole, to pass from the open position to the closed position, and vice versa, which device comprises:
a)two traction cables (400), each cable being intended to be loop-shaped, to be arranged externally and parallel to the corresponding longitudinal side (16), to pass through a plurality of guiding means (225) connected to the plurality of supporting means (210, 210a) and to be fixed to the driving supporting means (210a), so as to let the sliding of the driven supporting means (210) along the cables (400) acting on the driving supporting means (210a);
b)for each traction cable (400), a driving pulley (600a) and a driven pulley (600b) intended to cause the sliding of the corresponding cable (400) and thus to pull the driving supporting means (210a), together with the driven ones (210), from the open position to the closed position, and vice versa, and
c)a means (800) for driving the pulleys (600a, 600b),
**characterized in that** the guiding means (225) are connected to the resting feet (212) of the corresponding supporting means (210, 210a) through means (270) for releasably clamping such guiding means (225), and **in that** the releasable clamping means (270) are connected to the corresponding feet (212) through detachable means (216-217).

2. Cover according to claim 1, wherein each releasable clamping means (270) comprises an upper member consisting of a counterfoot (250) and a lower member consisting of said sliding block (213).

3. Cover according to claim 1. wherein each releasable clamping means comprises a member consisting of the very corresponding foot and another member consisting of a counterfoot, the sliding block being applied to the counterfoot.

4. Cover according to anyone of claims 2 and 3, wherein the counterfoot (250) comprises an external vertical downwardly oriented wing (226) which is intended to allow the fastening of an external portion (302) of the peripheral longitudinal side of the covering sheet (300).

5. Cover according to anyone of claims 2 to 4, wherein the counterfoot of the driving supporting means (210a) comprises a horizontal longitudinal projection (230) intended to constitute a wider resting basis for the foot of such a supporting means (210a) and thus to keep this latter in a substantially stable vertical position during the passage from the open position to the closed position, and vice versa, such a projection (230) being equipped with a sliding block (233).

6. Cover according to claims 2 and 4, wherein the upper (250) and lower (213) members of the releasable clamping means (270) constitute the jaws of a clamp which are articulated at their external ends; wherein a seating (280) for the guiding means (225) is arranged between the two jaws (250, 213) near the articulation (290) thereof; wherein the counterfoot (250), the sliding block (213) and the vertical wing (226) are made as a unique piece (270) from a plastic material.

7. Cover according to claims 2, 4 and 5, wherein the upper (250) and lower (213) members of the releasable clamping means constitute the jaws of a clamp which are articulated at their external ends; wherein a seating (280) for the sliding means (225) is arranged between the two jaws (250, 213) near the articulation (290) thereof; wherein the counterfoot (250), the projection (230) of this latter, the sliding blocks (213, 233) and the vertical wing (226) are made as a unique piece from a plastic material.

8. Cover according to anyone of claims 6 and 7, wherein the guiding means (225) has a stiffening tongue (275) for which a corresponding seating (285) is arranged between the two jaws (250, 213).

9. Cover according to anyone of claims 1 to 8, wherein the driving pulleys (600a), the driving means (800) together with the driving shafts (801) and the supporting means thereof (802) are arranged inside an enclosure (807), thus constituting a driving kit ready for use and intended to be fastened to the structure (10) to be covered.
